Europäisches Patentamt

European Patent Office

Office européen des brevets

(11) Veröffentlichungsnummer: **0 310 859**
**A1**

## (12) EUROPÄISCHE PATENTANMELDUNG

(21) Anmeldenummer: 88115446.2

(22) Anmeldetag: 21.09.88

(51) Int. Cl.4: **B01D 33/04**

(30) Priorität: 05.10.87 DE 3733616

(43) Veröffentlichungstag der Anmeldung:
**12.04.89 Patentblatt 89/15**

(84) Benannte Vertragsstaaten:
**AT CH DE ES FR GR IT LI**

(71) Anmelder: **Gebr. Bellmer GmbH & Co. KG,
Maschinenfabrik
Hauptstrasse 37
D-7532 Niefern 1(DE)**

(72) Erfinder: **Donath, Ehrhart
P.O. Box 207
Joubertina 6410(ZA)**
Erfinder: **Wenzel, Lothar, Dipl.-Ing.
Promenadenweg 50
D-7518 Bretten(DE)**
Erfinder: **Schmid, Helmut
Badstrasse 2
D-7132 Illingen(DE)**
Erfinder: **Kollmar, Ulrich
Auf dem Berg 17
D-7530 Pforzheim-Würm(DE)**

(74) Vertreter: **Frank, Gerhard, Dipl.-Phys.
Patentanwälte Dr. F. Mayer & G. Frank
Westliche 24
D-7530 Pforzheim(DE)**

(54) **Vorrichtung zur Entfernung von flüssigem oder faserförmigem Gut von einem Siebband.**

(57) Eine Vorrichtung zur Entfernung von flüssigem oder faserförmigem Gut von den Siebbändern im Abgabebereich von Bandfilterpressen weist mindestens eine parallel zu den beiden Ausgangswalzen rotierende Welle auf, die umfangsseitig mit radial verlaufenden Borsten versehen ist, die das Siebband im Umfangsbereich der Walze beaufschlagen. Je nach Wahl des Abstandes der Welle vom Siebband und damit der Beaufschlagungsart des Siebbandes durch die Borsten läßt sich damit eine kontinuierliche Vibrationswirkung und mechanische Beanspruchung des Siebbandes erzielen, die zur Abnahme von festem oder faserförmigem Gut von den Siebbändern Verwendung finden kann.

FIG.1

## Vorrichtung zur Entfernung von flüssigem oder faserförmigem Gut von einem Siebband.

Die Erfindung betrifft eine Vorrichtung zur Entfernung von flüssigem oder faserförmigem Gut von den Siebbändern in dem von zwei Preßwalzen gebildeten Abgabebereich einer Bandfilterpresse.

Bandfilterpressen dienen zum Flüssigkeitsentzug aus verschiedenen Preßgütern, beispielsweise Schlämmen in der Abwassertechnik oder auch aus Früchten in der fruchtverarbeitenden Industrie, insbesondere Getränkeindustrie.

Eine gattungsgemäße Vorrichtung gemäß Der DE-AS 12 77 203 zur Abnahme von entwässertem Preßgut im Abgabebereich von Bandfilterpressen verwendet Schaber, die in Schrägstellung die auf dem Siebband verbleibenden Teile entfernen sollen. Diese Schaber führen jedoch nur teilweise zu einem befriedigenden Arbeitsergebnis, da sich die Festpartikel über die Kante des Schabers legen und zu Beeinträchtigungen der Siebreinigung führen. Teilweise wird durch dieses Verfahren auch der gegenteilige Effekt erzielt, daß nämlich die Schaberkante Faserteile in die Siebporen hineindrückt, was eine anschließende Siebreinigung erschwert.

Aufgabe der Erfindung ist daher die Schaffung einer Vorrichtung, mit der die Abnahme sowohl von faserigen, festen, als auch flüssigen Partikeln von der Oberfläche eines Siebbandes im Abgabebereich auf einfache Weise ermöglicht wird.

Erfindungsgemäß wird die Aufgabe dadurch gelöst, daß jeweils wenigstens eine an sich bekannte Bürstenwalze unmittelbar im Umfangsbereich der beiden Preßwalzen angeordnet ist, derart, daß die Borsten der Bürstenwalzen durch die Gegenkraft der Preßwalzen in Zugrichtung vorgespannt werden, wenn die Bürstenwalzen entgegen der Zugrichtung rotieren.

Der Einsatz von rotierenden Bürsten in Bandfilterpressen ist zwar an sich bekannt (EP-OS 02 31 877, DE-OS 23 15 976, DE-OS 16 27 281), jedoch dienen hier die Bürsten zur Reinigung des Filterbandes beim Rücklauf von der Abgabestelle zur Einlaufstelle des Preßgutes nach den erwähnten Schabern.

Es hat sich überraschenderweise herausgestellt, daß durch Wahl einer geeigneten Rotationsgeschwindigkeit einerseits sowie Borstenanzahl und Borstenstärke andererseits sowie durch Wahl der Andruckkraft der Borsten auf das Siebband die oben beschriebene Aufgaben zufriedenstellend lösbar sind, daß also eine Bürstenwalze in der Lage ist, die bisher verwendeten Schaber vollständig zu ersetzen.

Zwei Ausführungsbeispiele der Erfindung werden anhand von Zeichnungen näher erläutert. Es zeigen:

Figur 1 eine schematische Seitenansicht einer Anordung mit zwei Bürstenwalzen,

Figur 2 eine Voreransicht einer Anordnung mit einer Bürstenwalze,

Figur 3 ein Teil-Schnitt durch eine Bürstenwalze in der Ebene A-A von Figur 2.

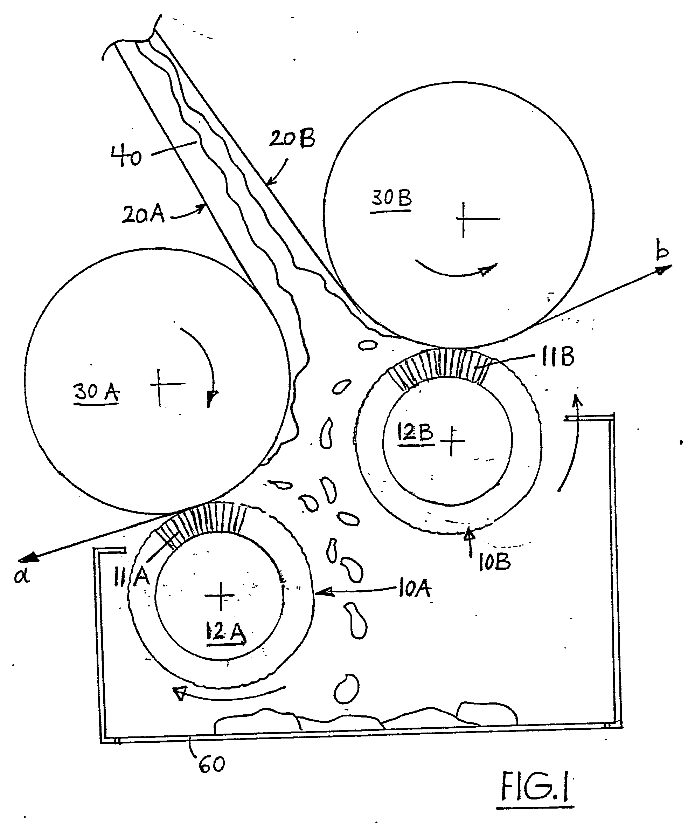

Bei dem in Figur 1 gezeigten Ausführungsbeispiel sind die beiden Ausgangswalzen 30A,30B einer Bandfilterpresse dargestellt, zwischen denen zwei Siebbänder 20A,20B geführt sind, die das entwässerte Preßgut 40 zwischen sich einschließen. Unmittelbar im Umfangsbereich dieser beiden Preßwalzen 30A,30B sind zwei Wellen 10A,10B angeordnet, deren Rotationsachse parallel zur Ebene der Siebbänder 20A,20B liegt. Während die Siebbänder 20A,20B in Richtung a bzw. b bewegt werden, werden die Wellen 10A,10B in gegenläufiger Richtung gedreht. Die Wellen 10A,10B sind umfangsseitig mit Borsten 11A,11B ausgerüstet, wobei der Abstand der jeweiligen Achsen der Wellen 10A,10B und die Borstenlänge bei diesem Ausführungsbeispiel so gewählt sind, daß die Borsten bei Berührung des Siebbandes durch die Gegenkraft der Walzen 30A,30B in Zugrichtung a,b der Siebbänder weggedrückt werden. Dadurch baut sich in den einzelnen Borsten infolge deren Eigenelastizität eine gegengerichtete Spannkraft auf, die wirksam wird, wenn sich der effektive Abstand zwischen der Achse der Wellen 10A,10B und der Siebbandoberfläche während der Rotation der Borsten wieder vergrößert. Dadurch stellen sich die Borsten wieder auf und führen folglich über einen gewissen Abschnitt des Siebbandes eine Bürst- oder Kehrbewegung aus, durch die die auf dem Siebband verbliebenen, nicht abgefallenen Teile des Preßgutes 40 abgehoben und in eine Wanne oder ein unterhalb der Abgabestelle befindliches Förderband 60 geschleudert werden. Hierbei geht es vorrangig nicht um die Ausübung einer mechanischen Kraft auf das Filterband, die Aufrichtbewegung der Borsten 11A,11B erzeugt einen Vibrationseffekt auf der Siebbandoberfläche, der das Abheben der Filterkuchenreste wirksam unterstützt und das Herauslösen der Reste des Preßgutes 40 aus den Poren der Siebbänder vorbereitet bzw. unterstützt. Bei einer ausreichenden Rotationsgeschwindigkeit von mindestens 10 Upm und entsprechendem Abstand der einzelnen Borsten untereinander ist auch ein Selbstreinigungseffekt der Borsten durch die auftretenden Zentrifugalkräfte gewährleistet, so daß die Borsten nach einer Umdrehung wieder "frisch" auf das Siebband aufgepreßt werden.

Anstelle von Borsten können die Wellen auch mit im wesentlichen radial verlaufenden Lamellen oder ähnlichem versehen sein. Entscheidend ist eine Profilierung der Oberfläche, die das Siebband in ähnlicher Weise beaufschlagt.

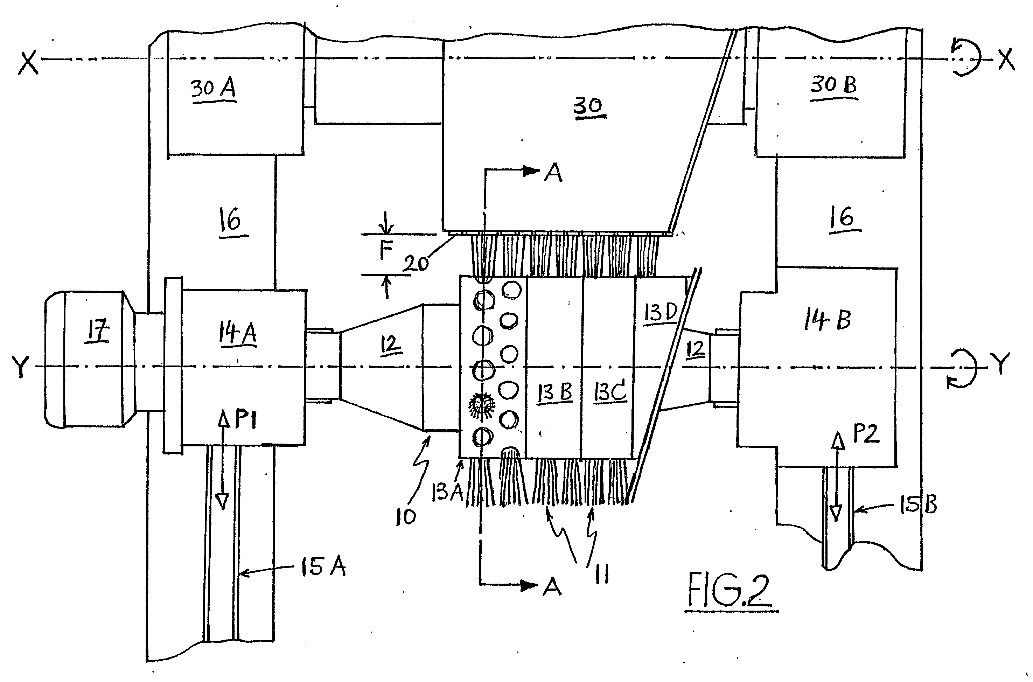

Figur 2 zeigt eine Vorderansicht einer Anordnung mit einer Bürstenwalze 10, die ein um eine Preßwalze 30 laufendes Siebband 20 beaufschlagt. Sowohl die Bürstenwalze 10 als auch die Preßwalze 30 sind bei diesem Ausführungsbeispiel auf Schenkeln 16 des gemeinsamen Maschinenrahmens gelagert, die Preßwalze 30 auf Preßwalzenlagern 30A,30B, die Bürstenwalze 10 auf Bürstenwalzenlagern 14A,14B.

Die beiden Bürstenwalzenlager 14A und 14B sind auf jeweils einer Schiene 15A,15B der Schenkel 16 derart verschiebbar gelagert, daß der Abstand F des Umfangs der Bürstenwalze 10 zum Siebband 20 einstellbar ist. Die Bürstenwalze 10 ist wie folgt aufgebaut:

Sie besteht aus einer Welle 12, die beidseitig in den Bürstenwalzenlagern 14A,14B gehalten ist und über einen Motor 17 antreibbar ist. Der Motor 17 erteilt der Welle 12 eine Rotationsgeschwindigkeit von mindestens zehn Umdrehungen pro Minute, die in Abstimmung auf das zu entfernende Preßgut, das Material des Siebbandes 20 und die Beschaffenheit der Borsten 11 der Bürstenwalze 10 sowie abhängig vom Abstand F einstellbar ist. Auf dem Mittelteil der Welle 12 sind mehrere Bürsten-Ringsegmente 13A,13B,13C,13D aufgeschoben und arretiert, die an ihrem Umfang die Borsten 11 tragen. Durch gemeinsames Verschieben der beiden Bürstenwalzenlager 14A,14B in Richtung der Pfeile P1,P2 werden die Borsten 11 soweit an das Siebband 20 herangeführt, bis diese einen kleinen Teil des auf der Preßwalze 30 aufliegenden Siebbandes 20 beaufschlagen und bei gegenläufiger Rotation von Preßwalze 30 und Welle 12 die erwünschte Kehrwirkung haben, die ausreicht, um die Preßgutrückstände auf dem Siebband 20 zuverlässig zu entfernen.

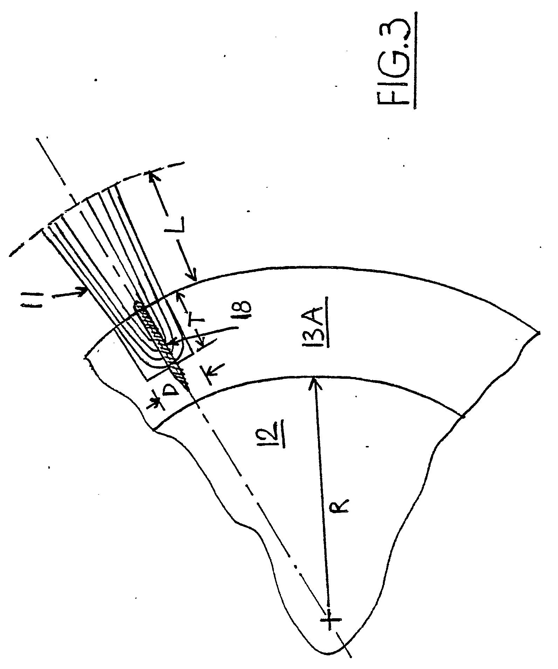

Es hat sich herausgestellt, daß zu diesem Zweck relativ kurze, harte Borsten 11 in der Regel am besten geeignet sind, die nur geringfügig gegen die Preßwalze 30 mit dem Siebband 20 gedrückt werden, d.h., deren Länge L (Figur 3) nur unwesentlich größer ist als der eingestellte Abstand F. Derartig harte, kurze Borsten üben den stärksten Vibrationseffekt auf das Siebband aus, der, wie sich gezeigt hat, wesentlich zur Entfernung des rückständigen Preßgutes beiträgt.

Wie aus Figur 2 erkennbar ist, sind die Borsten 11 nicht gleichmäßig über den Umfang der Ringsegmente 13A...13D verteilt (nur die Verteilung auf dem Segment 13A ist der Einfachheit halber dargestellt), sondern zu Büscheln mit kreisförmigem Querschnitt zusammengefaßt, die in Vertiefungen der Ringsegmente 13A...13D mittels U-förmiger Klammern oder Spangen 18 befestigt sind. Bei einem bevorzugten Ausführungsbeispiel ist der Durchmesser D eines solchen Büschels etwa 5,5 Millimeter, die Tiefe T der entsprechenden Vertiefungen in den Ringsegmenten 13A...13D beträgt etwa 8,3 Millimeter, die Borstenlänge L beträgt 15 Millimeter und die Dicke der Einzelborsten liegt im Bereich zwischen 0,4 bis 0,7 Millimeter. Die Borsten bestehen aus Polyamid .

Wie oben schon erwähnt, lassen sich diese Parameter in Abstimmung mit dem Abstand F und Umdrehungsgeschwindigkeit der Welle 12 auf den konkreten Einsatz der Bandfilterpresse, insbesondere das zu entwässernde Preßgut abstimmen, so daß mittels einfach durchzuführender Versuche eine optimale Kombination der zur Verfügung stehenden Parameter wie Bürstenmaterial, Borstenlänge, Abstand F und Rotationsgeschwindigkeit der Welle 12 gefunden werden kann, die optimale Ergebnisse erzielt, ohne daß, wie bei den Vorrichtungen nach dem Stand der Technik, zusätzliche mechanische Abkratzvorrichtungen wie Schaber oder ähnliches eingesetzt werden müßten.

## Ansprüche

1. Vorrichtung zur Entfernung von flüssigem oder faserförmigem Gut von den Siebbändern in dem von zwei Ausgangs-Preßwalzen gebildeten Abgabebereich einer Bandfilterpresse,
dadurch gekennzeichnet, daß jeweils wenigstens eine an sich bekannte Bürstenwalze (10A,10B) unmittelbar im Umfangsbereich der beiden Preßwalzen (30A,30B) angeordnet ist, derart, daß die Borsten (11A,11B) der Bürstenwalzen (10A,10B) durch die Gegenkraft der Preßwalzen (30A,30B) in Zugrichtung (a,b) vorgespannt werden, wenn die Bürstenwalzen (10A,10B) entgegen der Zugrichtung (a,b) rotieren.

2. Vorrichtung nach Anspruch 1, dadurch gekennzeichnet, daß die Rotationsgeschwindigkeit der Welle (10A,10B) mindestens 10 Upm beträgt.

3. Vorrichtung nach Anspruch 1, dadurch gekennzeichnet, daß die Bürstenwalze (10,10A,10B) aus einer zentralen Welle (12,12A,12B) aufgebaut ist, auf die mehrere Ringsegmente (13A...13D) aufgeschoben sind, die die Borsten (11,11A,11B) aufnehmen.

4. Vorrichtung nach Anspruch 3, dadurch gekennzeichnet, daß die Borsten (11,11A,11B) büschelweise auf dem Umfang der Ringsegmente (13A...13D) gruppiert sind.

5. Vorrichtung nach Anspruch 4, dadurch gekennzeichnet, daß die Büschel mittels Klammern oder Spangen (18) in den Ringsegmenten festgehalten sind.

6. Vorrichtung nach Anspruch 3, dadurch gekennzeichnet, daß die zentrale Welle (12) beidseitig in einem Lagerblock (14A,14B) gehalten sind, die synchron miteinander in Richtung zur Preßwalze (30) verschiebbar sind.

7. Vorrichtung nach Anspruch 1 oder 3, dadurch gekennzeichnet, daß die Länge (L) der Borsten (11) etwa 15 mm beträgt, und der Abstand (F) des Mantels der Bürstenwalze (10) vom Siebband (20) etwa 12-14 mm beträgt.

8. Vorrichtung nach Anspruch 7, dadurch gekennzeichnet, daß die Härte der Borsten (11) umso größer gewählt ist, je geringer die Differenz (L-F) zwischen ihrer Länge (L) und dem Abstand (F) des Mantels zum Siebband (20) ist.

EP 0 310 859 A1

FIG.1

X — X

30 A

30

30 B

16

A

16

F

20

17

14 A

12

13 D

14 B

Y — Y

P1

10

13 A

13 B

13 C

12

P2

15 A

A

11

15 B

FIG.2

EP 0 310 859 A1

FIG.3

EP 0 310 859 A1

Europäisches
Patentamt

**EUROPÄISCHER RECHERCHENBERICHT**

Nummer der Anmeldung

EP 88 11 5446

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | EP-A-0 231 877 (GEBR. BELLMER & CO. KG) <br> * Seite 2, Zeilen 20-27; Seite 4, Zeilen 12-19; Abbildung 6 * | 1 | B 01 D 33/04 |
| A | | 3-5 | |
| Y | GB-A- 849 644 (SANDERSON & MURRAY LTD) <br> * Seite 1, Zeilen 11-20; Seite 2, Zeilen 32-41; Seite 2, Zeilen 84-104; Abbildung 1b * | 1 | |
| A | | 6-8 | |
| A | FR-A- 496 859 (M.L. THIBAULT) <br> * Seite 1, Zeilen 23-26; Abbildungen 1,2 * | 1,3-5 | |
| A | CH-A- 394 125 (HYDOREX GmbH) <br> * Seite 4, Zeilen 105-109; Seite 7, Zeilen 61-93; Anspruch 30; Abbildungen 1,2,4,8 * | 1-3,7,8 | |

| RECHERCHIERTE SACHGEBIETE (Int. Cl.4) |
|---|
| B 01 D <br> B 30 B |

Der vorliegende Recherchenbericht wurde für alle Patentansprüche erstellt

| Recherchenort | Abschlußdatum der Recherche | Prüfer |
|---|---|---|
| DEN HAAG | 17-01-1989 | MARZENKE J. |